# EUROPÄISCHE PATENTSCHRIFT

(11) **EP 0 671 868 B1**
(45) Veröffentlichungstag und Bekanntmachung des Hinweises auf die Patenterteilung: **27.01.1999**
(21) Anmeldenummer: 95103243.2
(22) Anmeldetag: 07.03.1995
(51) Int. Cl.: H05B 41/36, H05B 41/29

(54) **Schaltungsanordnung zum gepulsten Betrieb einer Entladungslampe**
Circuit for pulsed-mode operation of a discharge lamp
Circuit pour l'opération en mode pulsé d'une lampe à décharge

(30) Priorität: 11.03.1994 DE 4408314
(43) Veröffentlichungstag der Anmeldung: 13.09.1995
(73) Patentinhaber: Patent-Treuhand-Gesellschaft für elektrische Glühlampen mbH, 81543 München (DE)
(72) Erfinder: Bernitz, Franz, D-82008 Unterhaching (DE); Huber, Andreas, D-82216 Maisach (DE); Hirschmann, Günther, D-81827 München (DE)

(56) Entgegenhaltungen:
- EP-A- 0 477 587
- DE-A- 4 005 776
- US-A- 5 373 215

## Beschreibung

Die Erfindung betrifft eine Schaltungsanordnung zum gepulsten Betrieb einer Entladungslampe, insbesondere einer Natriumhochdruckentladungslampe, gemäß dem Oberbegriff des Anspruchs 1.

Der gepulste Betrieb von Entladungslampen, insbesondere Natriumhochdruckentladungslampen, stellt besonders hohe Anforderungen an die Leistungselektronik der Schaltungsanordnung. Wie in der deutschen Patentanmeldung DE 43 01 276 A1 aufgeführt, läßt sich bei Natrium-Hochdruckentladungslampen eine optimale Einstellung der lichttechnischen Daten, wie Brennspannung, Lichtausbeute, Farbtemperatur und Farbwiedergabeindex, durch die Regelung des Dampfdrucks erreichen. Als Regelgröße für den Dampfdruck kann die Impedanz des Plasmas in der Lampe dienen, wobei es zum stabilisierten Betrieb der Lampe nur noch erforderlich ist, die Ausgangsleistung der Stromversorgung so zu regeln, daß die Impedanz der Lampe den gefundenen Wert annimmt.

Die Impedanz der Lampe kann grundsätzlich durch Bildung des Quotienten aus der Lampenspannung und dem Lampenstrom gewonnen werden, wobei im Impulsbetrieb sowohl der jeweilige Wert in der Impulsphase als auch in der Haltephase benutzt werden kann. Bei Verwendung einer Stromversorgung mit gegenüber Netzspannungsschwankungen stabilisierter Leerlaufspannung und vorgegebener Ausgangsimpedanz genügt es sogar, lediglich den Strom oder die Spannung an der Lampe auf den vorgegebenen Sollwert zu regeln, der dem Optimalwert des Dampfdrucks und damit dem der Farbwiedergabeeigenschaften und der Lichtausbeute sowie der Brennspannung entspricht. Im Fall eines Impulsbetriebs der Lampe durch eine Stromversorgung mit gegenüber Netzspannungsschwankungen stabilisierter Leerlaufspannung und vorgegebener Ausgangsimpedanz reicht als Regelgröße eine der Größen Impulsspannung, Impulsstrom, Haltespannung oder Haltestrom. Die Nachregelung der Lampenleistung kann dann wahlweise durch die Veränderung der Breite und des Abstands der Leistungsimpulse und/oder der Halteleistung realisiert werden.

Weiterhin zeigte sich, daß beim gepulsten Betrieb von Natrium-Hochdruckentladungslampen durch die Änderung der Momentanleistung während der Impulsphase die Farbtemperatur frei zwischen 2500 und mehr als 3000 K eingestellt werden kann, wie in der deutschen Patentanmeldung DE 43 01 256 A1 aufgeführt.

Aus der DE 41 23 187 A1 ist ein Vorschaltgerät zum Pulsbetrieb von Gasentladungslampen bekannt. Das elektronische Vorschaltgerät besteht im wesentlichen aus einer selbstschwingenden oder fremdgesteuerten Halb- oder Vollbrückenschaltung und einer einzigen Reaktanz. Ein solcher Schaltungsaufbau erfordert beim Pulsbetrieb der Natriumhochdruckentladungslampe eine Frequenzänderung der Brückenschaltung zur Anpassung der Ströme an die Haltephase (Simmerstrombetrieb) bzw. Pulsphase (Impulsstrombetrieb). Da die Lampenstromamplitude zwischen der Halte- und Pulsphase bis zum Faktor 100 variieren kann, ist eine solche Halb- oder Vollbrückenschaltung nur mit einem hohen Technik- und Kostenaufwand realisierbar. Die Schaltungsanordnung sollte außerdem eine hohe Flexibilität in bezug auf die Betriebsströme und Betriebsfrequenzen ermöglichen, was mit einer Frequenzumtastung bei lediglich einer Brückenschaltung zur Erzeugung des Simmern- und Impulsstrombetriebs nicht durchführbar ist.

Aufgabe der Erfindung ist es daher, eine Schaltungsanordnung zum Pulsbetrieb von Entladungslampen, insbesondere Natriumhochdruckentladungslampen zu schaffen, die keine der oben aufgeführten Nachteile aufweist, und möglichst viele Freiheitsgrade in bezug auf die Wahl der Betriebsströme und Betriebsfrequenzen offenhält. Die Schaltungsanordnung sollte außerdem eine einfache und kostengünstige Umschaltung der Farbtemperatur ermöglichen. Akustische Störungen sollten beim Betrieb weitgehend unterbunden werden.

Die Aufgabe wird durch eine Schaltungsanordnung mit den im kennzeichnenden Teil des Anspruchs 1 aufgeführten Merkmalen gelöst. Weitere vorteilhafte Merkmale der Schaltungsanordnung sind den Unteransprüchen zu entnehmen.

Durch den Aufbau der Schaltungsanordnung aus zwei parallel verschalteten Halbbrücken, die getrennt angesteuert werden, wobei jeder Halbbrücke eine eigene strombegrenzende Induktivität zugeordnet ist, kann die Puls- und die Simmerphase unabhängig voneinander geregelt werden. Dies ermöglicht es, den gepulsten Betrieb völlig frei an die Bedürfnisse der zu betreibenden Entladungslampe anzupassen. Außerdem ergeben sich keine Beschränkungen bei einer beabsichtigten Umschaltung der Farbtemperatur von Natriumhochdruckentladungslampen im Bereich zwischen 2500 und 3000 K.

Die Aufteilung des Zwischenkreiskondensators in zwei in Reihe geschaltete Kondensatoren parallel zu den Transistoren der Halbbrücken hat erhebliche Vorteile: Neben der sonst üblichen Aufgabe des Zwischenkreiskondensators als Energiepuffer während des Netznulldurchgangs erfüllen die beiden Kondensatoren auch die Aufgabe des Koppelkondensators. Dieser dient bei einer solchen Schaltungskonfiguration zur Erzeugung eines Spannungspegels, so daß ein Wechselstrombetrieb der Last, d.h. der Lampe, ermöglicht wird. Die beiden Kondensatoren haben vorteilhaft eine gleich große Kapazität, was ein völlig symmetrisches Arbeiten der Transistoren gewährleistet. Die Kondensatoren sind außerdem vorteilhaft als Elektrolytkondensatoren ausgeführt, so daß im Gegensatz zum üblicherweise verwendeten Folienkondensator keinerlei Geräusche beim Laststromwechsel im Hörbereich durch Elektrostriktion emittiert werden. Die Elektrolytkondensatoren besitzen zusätzlich ein sehr günstiges Verhältnis zwischen Energiespeichervermögen und Bauvolumen.

Die Schaltungsanordnung weist eine in der Doppelhalbbrücke integrierte Impulszündschaltung zum Starten der Lampe auf, so daß auf eine externe Zündschaltung mit einer zusätzlichen Stromversorgungseinheit verzichtet werden kann. Die Impulszündschaltung besteht dabei vorteilhaft aus einer Reihenschaltung einer Funkenstrecke oder eines Halbleiterschalters (z.B. eines Sidacs), eines Kondensators und einer Wicklung, die einerseits mit dem positiven Eingang der Doppelhalbbrücke und andererseits über einen Widerstand und einen Schalter mit dem negativen Eingang der Doppelhalbbrücke verbunden ist. Die Wicklung ist dabei auf der strombegrenzenden Induktivität der Halbbrücke zur Erzeugung der Pulsphase angebracht und ermöglicht so eine sehr einfache Einspeisung der Impulszündspannungen in den Lastkreis der Schaltungsanordnung.

Der Generator zur Erzeugung der am Eingang der Doppelhalbbrücke benötigten Gleichspannung kann im einfachsten Fall aus lediglich einem Brückengleichrichter bestehen. Benötigt die Doppelhalbbrücke zum Zünden und Betrieb der Entladungslampe dagegen eine gegenüber der Netzspannung veränderte Zwischenkreisgleichspannung, so beinhaltet der Generator vorteilhaft neben dem Brückengleichrichter ein Schaltnetzteil, z.B. in Form eines Hochsetzstellers. Ein solches Schaltnetzteil ermöglicht außerdem eine sinusförmige Stromaufnahme.

Die Schaltungsanordnung besitzt durch die Doppelhalbbrücke den großen Vorteil, daß am Mittenabgriff der beiden Transistoren der Halbbrücke für die Pulsphase direkt eine der Lampenspannung proportionale Spannung für Regelzwecke abgegriffen werden kann. Diese Abgriffsmöglichkeit vereinfacht den optimalen Betrieb der Entladungslampe.

Die Schaltungsanordnung ist anhand der nachfolgenden Figur näher veranschaulicht.

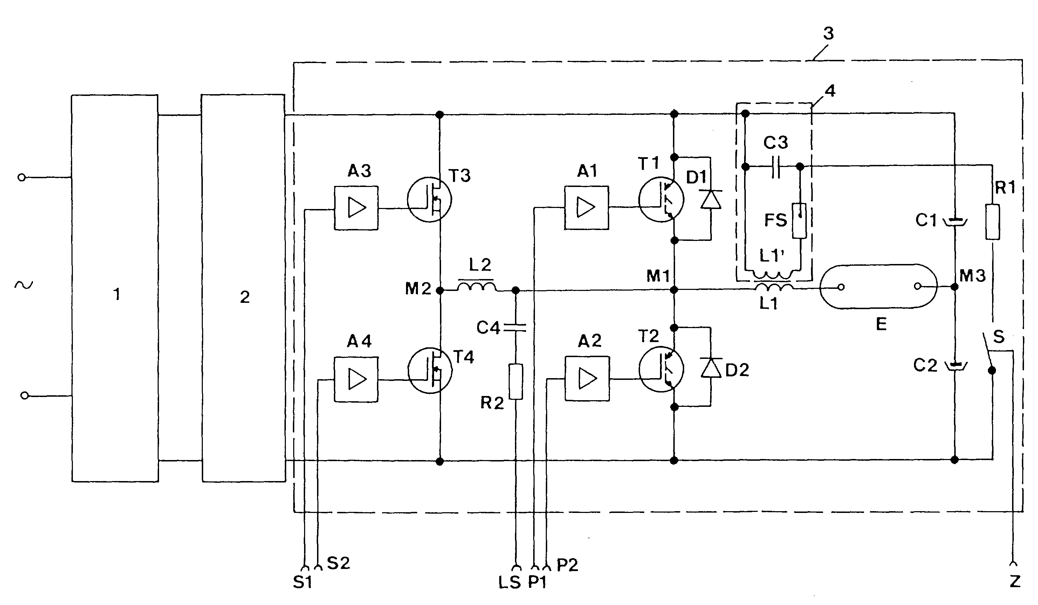

Die Figur zeigt eine erfindungsgemäße Schaltungsanordnung zum gepulsten Betrieb einer Natriumhochdruckentladungslampe E mit einer Nennleistung von 80 W.

Die Schaltungsanordnung setzt sich aus einem Funkentstörfilter 1, einem Generator 2 zur Erzeugung einer Gleichspannung von 420 V und einer Doppelhalbbrücke 3 mit einer integrierten Impulszündschaltung 4 zusammen.

Das Funkentstörfilter 1 besitzt einen bekannten herkömmlichen Aufbau und soll hier nicht näher betrachtet werden. Der Gleichspannungsgenerator 2 beinhaltet eine Gleichrichterbrücke und einen Hochsetzsteller bekannter Bauart und erzeugt an seinem Ausgang eine stabilisierte Gleichspannung von 420 V.

Die Doppelhalbbrücke 3 beinhaltet eine erste Halbbrücke mit zwei in Reihe geschalteten MOS-FET-Transistoren T3,T4 parallel zum Ausgang des Generators 2 zur Erzeugung der Simmerphase. Die Ansteuerung der beiden Transistoren T3,T4 erfolgt mittels Ansteuerschaltungen A3 bzw. A4 aus einem externen Steuergerät über die Simmeranschlüsse S1 und S2.

Parallel zur ersten Halbbrücke ist eine zweite Halbbrücke mit zwei in Reihe geschalteten Leistungstransistoren T1, T2 und Freilaufdioden D1,D2 geschaltet. Die Ansteuerung dieser beiden Transistoren T1,T2 erfolgt mittels Ansteuerschaltungen A1,A2 aus demselben externen Steuergerät über die Impulsanschlüsse P1 und P2. Die Ansteuerschaltungen Al bis A4 besitzen einen für solche Schaltungen üblichen Aufbau und sollen hier nicht näher betrachtet werden.

Parallel zur zweiten Halbbrücke sind als Zwischenkreiskondensator zwei gleich große Elektrolytkondensatoren C1 und C2 geschaltet.

Zwischen den Mittenabgriff M2 der beiden MOS-FET-Transistoren T3,T4 für die Simmerphase und den Mittenabgriff M1 der Leistungstransistoren T1,T2 ist eine strombegrenzende Induktivität L2 für den Simmerbetrieb geschaltet. Zwischen den Mittenabgriff M1 der Leistungstransistoren T1,T2 und den Mittenabgriff M3 der beiden Elektrolytkondensatoren C1,C2 ist in Reihe eine strombegrenzende Induktivität L1 für die Pulsphase und die Natriumhochdruckentladungslampe E geschaltet.

Die Impulszündschaltung 4 besteht aus einer Reihenschaltung eines Kondensators C3, einer Wicklung L1' und einer Schaltfunkenstrecke FS. Diese ist einerseits mit dem positiven Eingang der Doppelhalbbrükke 3 und über einen Widerstand R1 und einen Schalter S mit dem negativen Eingang der Doppelhalbbrükke 3 verbunden. Die Einspeisung der Zündspannung in die Lampe erfolgt durch Anbringung der zusätzlichen Wicklung L1' auf der strombegrenzenden Induktivität L1. Über einen Zündanschluß Z, der auf den Schalter S einwirkt, kann die Impulszündschaltung von außen gesteuert werden.

Die Doppelhalbbrücke 3 ermöglicht es, über einen Kondensator C4 und einen Widerstand R2 am Mittenabgriff M1 eine der Lampenspannung proportionale Spannung LS abzugreifen, wenn die Transistoren T1,T2 abgeschaltet sind, d.h. die Simmerphase aktiv ist.

In der nachfolgenden Tabelle sind die verwendeten Bauteile für die erfindungsgemäße Schaltungsanordnung zum Pulsbetrieb der 80 W-Natriumhochdruckentladungslampe aufgeführt:
- T1,T2 :: IGBT 30A, 600 V
- T3,T4 :: BUZ 74A, 400 V
- D1,D2 :: Diode 3A, 600 V
- L1 :: 85 µH
- L2 :: 2,3 mH
- C1,C2 :: 150 µF, 250 V
- R1 :: 100 k Ω
- C3 :: 0,33 µF, 400 V
- FS :: KAS 03X, 350 V
- L1' :: 0,5 µH

## Patentansprüche

1. Schaltungsanordnung zum gepulsten Betrieb einer Entladungslampe, insbesondere einer Natriumhochdruckentladungslampe (E), dadurch gekennzeichnet, daß die Schaltungsanordnung einen Generator (2) zur Erzeugung einer positiven Gleichspannung und eine an dem Generator angeschlossene Doppelhalbbrücke (3)
- aus zwei parallelgeschalteten Halbbrücken mit Transistoren (T1,T2; T3,T4) als Schaltmittel zum Erzeugen der Puls- bzw. Simmerphase, wobei jede Halbbrücke getrennt angesteuert wird und jeder Halbbrücke eine eigene strombegrenzende Induktivität (L1, L2) zugeordnet ist
- aus einem Zwischenkreiskondensator, der in zwei in Reihe geschaltete Kondensatoren (C1,C2) aufgeteilt ist, wobei die beiden Kondensatoren (C1,C2) parallel zu den Transistoren (T1,T2; T3, T4) der Halbbrücken geschaltet sind und
- aus einer Impulszündschaltung (4) zum Zünden der Entladungslampe, die in die Halbbrücke zum Erzeugen der Pulsphase integriert ist
beinhaltet.

2. Schaltungsanordnung nach Anspruch 1, dadurch gekennzeichnet, daß der Generator im wesentlichen einen Gleichrichter enthält.

3. Schaltungsanordnung nach Anspruch 1, dadurch gekennzeichnet, daß der Generator (2) im wesentlichen einen Gleichrichter und ein nachgeschaltetes Schaltnetzteil enthält.

4. Schaltungsanordnung nach Anspruch 1, dadurch gekennzeichnet, daß die beiden in Reihe geschalteten Kondensatoren (C1,C2) des Zwischenkreiskondensators Elektrolytkondensatoren sind.

5. Schaltungsanordnung nach Anspruch 1, dadurch gekennzeichnet, daß die beiden in Reihe geschalteten Kondensatoren (C1,C2) des Zwischenkreiskondensators gleich große Kapazitäten aufweisen.

6. Schaltungsanordnung nach Anspruch 1, dadurch gekennzeichnet, daß die integrierte Impulszündschaltung (3) aus einer Reihenschaltung einer Funkenstrecke (FS), eines Kondensators (C3) und einer Wicklung (L1') besteht, die einerseits mit dem positiven Eingang der Doppelhalbbrücke und andererseits über einen Widerstand (R1) und einen Schalter (S) mit dem negativen Eingang der Doppelhalbbrücke verbunden ist.

7. Schaltungsanordnung nach Anspruch 1, dadurch gekennzeichnet, daß die integrierte Impulszündschaltung aus einer Reihenschaltung eines Halbleiterschalters, eines Kondensators und einer Wicklung besteht, die einerseits mit dem positiven Eingang der Doppelhalbbrücke und andererseits mit dem negativen Eingang der Doppelhalbbrücke verbunden ist.

8. Schaltungsanordnung nach Anspruch 6, dadurch gekennzeichnet, daß die Wicklung (L1') auf der strombegrenzenden Induktivität (L1) der Halbbrücke zur Erzeugung der Impulsströme angebracht ist.

9. Schaltungsanordnung nach Anspruch 1, dadurch gekennzeichnet, daß am Mittenabgriff (M1) zwischen den beiden Transistoren (T1,T2) für die Pulsphase über einen Kondensator (C4) und einen Widerstand (R2) eine der Lampenspannung proportionale Spannung (LS) für Regelzwecke abgegriffen werden kann.

## Claims

1. Circuit arrangement for pulsed operation of a discharge lamp, in particular a sodium high-pressure discharge lamp (E), characterized in that the circuit arrangement includes a generator (2) for generating a positive DC voltage, and a double half bridge (3) which is connected to the generator and
- comprises two parallel-connected half bridges with transistors (T1, T2; T3, T4) as switching means for generating the pulsed or simmerphase, each half bridge being driven separately and each half bridge being assigned a dedicated current-limiting inductor (L1, L2),
- comprises an intermediate circuit capacitor which is split into two capacitors (C1, C2) connected in series, the two capacitors (C1, C2) being connected in parallel with the transistors (T1, T2; T3, T4) of the half bridges, and
- comprises a pulse ignition circuit (4) for igniting the discharge lamp, which is integrated into the half bridge for generating the pulsed phase.

2. Circuit arrangement according to Claim 1, characterized in that the generator essentially includes a rectifier.

3. Circuit arrangement according to Claim 1, characterized in that the generator (2) essentially includes a rectifier and a downstream switched-mode power supply.

4. Circuit arrangement according to Claim 1, characterized in that the two series-connected capacitors (C1, C2) of the intermediate circuit capacitor are electrolytic capacitors.

5. Circuit arrangement according to Claim 1, characterized in that the two series-connected capacitors (C1, C2) of the intermediate circuit capacitor have capacitances of the same magnitude.

6. Circuit arrangement according to Claim 1, characterized in that the integrated pulse ignition circuit (4) comprises a series circuit of a spark gap (FS), a capacitor (C3) and a winding (L1'), which is connected, on the one hand, to the positive input of the double half bridge and, on the other hand, to the negative input of the double half bridge via a resistor (R1) and a switch (S).

7. Circuit arrangement according to Claim 1, characterized in that the integrated pulse ignition circuit comprises a series circuit of a semiconductor switch, a capacitor and a winding, which is connected, on the one hand, to the positive input of the double half bridge and, on the other hand, to the negative input of the double half bridge.

8. Circuit arrangement according to Claim 6, characterized in that the winding (L1') is attached to the current-limiting inductor (L1) of the half bridge for generating the pulse currents.

9. Circuit arrangement according to Claim 1, characterized in that for control purposes a voltage (LS) proportional to the lamp voltage can be tapped at the centre tap (M1) between the two transistors (T1, T2) for the pulsed phase via a capacitor (C4) and a resistor (R2).

## Revendications

1. Montage pour le fonctionnement en mode d'impulsion d'une lampe à décharge, notamment d'une lampe (E) à décharge à haute pression au sodium, caractérisé en ce que le montage comprend un générateur (2) pour produire une tension continue positive et un double demi-pont (3) raccordé au générateur, constitué :
- de deux demi-ponts branchés en parallèle, comportant des transistors (T1,T2;T3,T4) comme moyen de commutation pour produire la phase d'impulsion et la phase de maintien, chaque demi-pont étant commandé de manière séparé et une inductance (L1,L2) propre, limitant le courant, étant associé à chaque demi-pont,
- d'un condensateur de circuit intermédiaire qui est subdivisé en deux condensateurs (C1,C2) branchés en série, les deux condensateurs (C1,C2) étant branchés en parallèle avec les transistors (T1,T2;T3,T4) des demi-ponts., et
- d'un circuit (4) d'amorçage d'impulsion pour amorcer la lampe à décharge, qui est intégré au demi-pont servant à produire la phase d'impulsion.

2. Montage suivant la revendication 1, caractérisé en ce que le générateur contient essentiellement un redresseur.

3. Montage suivant la revendication 1, caractérisé en ce que le générateur 2 contient essentiellement un redresseur et une alimentation à découpage monté en aval.

4. Montage suivant la revendication 1, caractérisé en ce que les deux condensateurs (C1,C2), montés en série, du condensateur de circuit intermédiaire sont des condensateurs électrochimiques.

5. Montage suivant la revendication 1, caractérisé en ce que les deux condensateurs (C1,C2) montés en série, du condensateur de circuit intermédiaire ont des capacités de même dimension.

6. Montage suivant la revendication 1, caractérisé en ce que le circuit (3) intégré d'amorçage d'impulsion est constitué d'un circuit série d'un éclateur (FS), d'un condensateur (C3) et d'un enroulement (Ll'), qui est relié, d'une part, à l'entrée positive du double demi-pont et, d'autre part, par l'intermédiaire d'une résistance (R1) et d'un interrupteur (S), à l'entrée négative du double demi-pont.

7. Montage suivant la revendication 1, caractérisé en ce que le circuit intégré d'amorçage d'impulsion est constitué d'un circuit série d'un interrupteur à semi-conducteur, d'un condensateur et d'un enroulement, qui est relié, d'une part , à l'entrée positive du double demi-pont, et d'autre part, à l'entrée négative du double demi-pont.

8. Montage suivant la revendication 6, caractérisé en ce que l'enroulement (L1') est monté sur l'inductance (L1), limitant le courant, du demi-pont servant à produire les courants d'impulsions.

9. Montage suivant la revendication 1, caractérisé en ce que, à des fins de régulation, une tension (LS) proportionnelle à la tension de la lampe peut, par l'intermédiaire d'un condensateur (C4) et d'une résistance (R2), être prélevée à la prise (M1) médiane entre les deux transistors (T1,T2) pour la phase d'impulsion.
